# EUROPÄISCHE PATENTSCHRIFT

(11) **EP 3 412 391 B1**
(45) Veröffentlichungstag und Bekanntmachung des Hinweises auf die Patenterteilung: **17.11.2021**
(21) Anmeldenummer: 17400036.4
(22) Anmeldetag: 09.06.2017
(51) Int. Cl.: B23D 45/16, B23D 47/12, B25F 5/00, B27B 5/38

(54) **ARBEITSGERÄT MIT EINER ELEKTROMAGNETISCHEN BREMSEINRICHTUNG**
WORK DEVICE WITH ELECTROMAGNETIC BRAKE
ENGIN DOTÉ D'UN DISPOSITIF DE FREINAGE ÉLECTROMAGNÉTIQUE

(43) Veröffentlichungstag der Anmeldung: 12.12.2018
(73) Patentinhaber: Andreas Stihl AG & Co. KG, 71336 Waiblingen (DE)
(72) Erfinder: SCHNEIDER, Michael, 70736 Fellbach (DE); MAYER, Felix, 71332 Waiblingen (DE); DEIGENDESCH, Tobias, 71522 Backnang (DE); HANUßEK, Sebastian, 71686 Remseck (DE)
(74) Vertreter: Wasmuth, Rolf

(56) Entgegenhaltungen:
- US-A- 4 402 138
- US-A- 4 432 139
- US-A- 4 573 556
- US-A1- 2010 257 743
- US-A1- 2011 186 319
- US-A1- 2017 072 482

## Beschreibung

Die Erfindung betrifft ein Arbeitsgerät mit einem Arbeitswerkzeug, wobei das Arbeitswerkzeug von einem Verbrennungsmotor angetrieben ist. Es ist eine Bremseinrichtung zum Abbremsen des auslaufenden Arbeitswerkzeugs vorgesehen, wobei die Bremseinrichtung ein das Werkzeug abbremsendes Bremselement aufweist. In einer Bremsstellung der Bremseinrichtung bremst das Bremselement das Arbeitswerkzeug ab, während in einer Bereitschaftsstellung der Bremseinrichtung das Bremselement die Bewegung des Arbeitswerkzeugs freigibt.

Ein derartiges Arbeitswerkzeug gemäß dem Oberbegriff des Anspruchs 1, mit einem Bremselement, das in seiner Bereitschaftsstellung mit einer von einem Elektromagneten bereitgestellten Haltekraft gehalten wird, ist aus der US 2017/072482 A1 bekannt. Die Energie zum Betrieb des Elektromagneten wird von einem vom Verbrennungsmotor angetriebenen elektrischen Generator bereitgestellt, der einen Energiespeicher speist. Aus dem Energiespeicher wird in der Bereitschaftsstellung der Bremseinrichtung dem Elektromagneten ein Haltestrom zugeführt.

Der Haltestrom des Elektromagneten ist in seiner Größe so gewählt, dass der Elektromagnet eine ausreichend hohe Haltekraft bereitstellt, die ein unbeabsichtigtes Auslösen der Bremseinrichtung im Betrieb sicher vermeidet. Die Stromstärke ist so gewählt, dass die Haltekraft derart groß ist, dass auch bei Vibrationen des Arbeitsgeräts, bei Schlägen und Stößen ein Auslösen der Bremseinrichtung sicher vermieden ist.

Wird das Arbeitsgerät abgestellt und der Verbrennungsmotor ausgeschaltet, liefert der vom Verbrennungsmotor angetriebene elektrische Generator zunächst noch Energie zum Betrieb des Elektromagneten. Mit sinkender Drehzahl des auslaufenden Verbrennungsmotors sinkt auch die Generatorspannung, bis bei Erreichen einer kritischen Drehzahl der Generator die notwendige Energie zur Aufrechterhaltung des Haltestroms nicht mehr bereitstellen kann. Der Haltestrom bricht zusammen, und der Elektromagnet gibt die Bremseinrichtung frei. Unter Wirkung einer Rückstellkraft wird die Bremseinrichtung nach Abfallen des Haltestroms aus der Bereitschaftsstellung in die Bremsstellung wechseln, wodurch das Bremselement anlegt und das auslaufende Arbeitswerkzeug abbremst. Der Bremsvorgang dieser Auslaufbremsung wird bereits bei noch relativ hoher Auslaufdrehzahl ausgelöst, da der Energiespeicher den hohen Haltestrom bei dieser Auslaufdrehzahl nicht mehr bereitstellen kann. Die Bremseinrichtung unterliegt einem entsprechenden Verschleiß.

Der Erfindung liegt die Aufgabe zugrunde, ein Arbeitsgerät mit einer elektromagnetisch gehaltenen Bremseinrichtung derart weiterzubilden, dass der durch eine Auslaufbremsung entstehende Verschleiß der Bremseinrichtung reduziert ist.

Die Aufgabe wird nach den Merkmalen des Anspruchs 1 gelöst.

Nach dem Ausschalten des Verbrennungsmotors wird ein Betriebsparameter des Verbrennungsmotors überwacht. Nach Erreichen eines Grenzwertes dieses überwachten Betriebsparameters wird der dem Elektromagneten zugeführte Haltestrom abgesenkt.

Durch das Absenken des Haltestroms wird die dem Elektromagneten zugeführte elektrische Energie reduziert. Bei auslaufendem Verbrennungsmotor kann durch den Generator ein abgesenkter Haltestrom zeitlich länger aufrechterhalten werden als ein nicht abgesenkter Haltestrom. Da der Haltestrom im Betrieb groß gewählt wird, damit beispielsweise auch Schläge, Stöße und Vibrationen nicht zu einer Auslösung der Bremseinrichtung führen, wird ein geringerer Haltestrom bei auslaufendem Verbrennungsmotor nicht unmittelbar zu einem Auslösen der Bremseinrichtung führen. Ein auslaufendes Arbeitsgerät wird beispielsweise vom Benutzer getragen, so dass die Haltekraft für die Bremseinrichtung grundsätzlich geringer ausgewählt werden kann, da beispielsweise keine Schläge und Stöße auftreten werden. Durch das Absenken des Haltestroms wird somit der Energiebedarf des Elektromagneten gesenkt. Durch die Absenkung des Haltestroms ist auch bei einer niedrigeren Drehzahl des auslaufenden Verbrennungsmotors eine dadurch bedingte geringere Generatorspannung noch ausreichend, um den Elektromagneten in Betrieb zu halten und eine - kleinere - Haltekraft bereitzustellen. Dadurch wird die Bremseinrichtung zum Abbremsen des auslaufenden Arbeitswerkzeugs später eingreifen. Da beim späteren Eingreifen der Bremse weniger Energie im System steckt und daher weniger gebremst werden muss, ist der Verschleiß pro Auslaufbremsung geringer; die Standzeit der Bremseinrichtung wird größer.

Durch das spätere Eingreifen der Bremseinrichtung beim Auslaufen des Arbeitswerkzeugs liegen niedrigere Drehzahlen des Arbeitswerkzeugs beim Auslösen der Bremseinrichtung an. Insgesamt muss bei einem späteren Zeitpunkt der Bremsung weniger Energie durch das Bremsen vernichtet werden.

Insbesondere weist das Arbeitswerkzeug keine Batterie zum Speichern der Energie auf. Die komplette Energieversorgung des Arbeitsgerätes wird über einen Generator bereitgestellt. Auch beim Starten steht dem Verbrennungsmotor zunächst keine elektrische Energie zur Verfügung. Erst mit Drehung der Kurbelwelle wird der Generator ausreichend Energie bereitstellen, um die Bremseinrichtung durch den Haltemagnet gelöst zu halten, d. h. in ihrer Bereitschaftsstellung zu halten.

Bevorzugt wird als Betriebsparameter die Drehzahl des Verbrennungsmotors genutzt. Die Drehzahl des Verbrennungsmotors kann in einfacher Weise durch die Nulldurchgänge der durch den Generator erzeugten Wechselspannung bestimmt werden.

Der Betriebsparameter kann auch die Amplitude der Ausgangsspannung des Generators sein. Mit sinkender Drehzahl sinkt die Amplitude der Ausgangsspannung des Generators, so dass nach Erreichen eines Grenzwertes der Amplitude oder nach Unterschreiten eines Grenzwertes der Amplitude der dem Elektromagneten zugeführte Haltestrom abgesenkt wird.

Im Betrieb kann ein Haltestrom in einem Bereich zwischen 30 mA bis 1000 mA liegen. Besonders bevorzugt liegt der Haltestrom zwischen 50 mA und 300 mA, insbesondere bei 185 mA. Bevorzugt ist vorgesehen, den Haltestrom als Funktion der Drehzahl in Form einer negativ fallenden Rampe zu verringern. Insbesondere wird die Steigung der Rampe als Quotient einer parametrierbaren Stromdifferenz zu einer parametrierbaren Drehzahldifferenz bestimmt.

Es kann zweckmäßig sein, den Haltestrom in Stufen abzusenken. Vorteilhaft wird eine Stufe über einen vorgegebenen Zeitraum gehalten, insbesondere über einen vorgegebenen Zeitraum von mindestens 5 ms gehalten.

In Weiterbildung der Erfindung wird der Energiespeicher als Kondensator ausgeführt. Der Haltestrom für den Elektromagneten wird aus dem Kondensator gespeist.

Nach dem Abschalten des Verbrennungsmotors wird die dem Energiespeicher zufließende elektrische Energie kleiner werden als die aus dem Energiespeicher zu dem Elektromagneten abfließende elektrische Energie.

Eine gewünschte Haltezeit des Elektromagneten nach dem Abschalten des Verbrennungsmotors kann durch Wahl der Kapazität des Energiespeichers vorgegeben werden.

Das Arbeitswerkzeug ist von einem Verbrennungsmotor angetrieben, wobei der Antrieb ein Antriebselement aufweist, auf den das Bremselement wirkt. Zweckmäßig ist das Antriebselement die Kupplungstrommel einer Fliehkraftkupplung. Dabei wirkt das Bremselement unter der Wirkung einer Anlagekraft auf das Antriebselement. Eine derartige Anlagekraft wird zweckmäßig von einer Bremsfeder bereitgestellt.

Weitere Merkmale der Erfindung ergeben sich aus den weiteren Ansprüchen.

Vorteilhafte weitere Ausführungsbeispiele ergeben sich durch beliebige Kombination der angegebenen Merkmale der beschriebenen Ausführungsbeispiele.

Weitere Merkmale der Erfindung ergeben sich aus den weiteren Ansprüchen, der Beschreibung und der Zeichnung, in der ein nachfolgend im Einzelnen beschriebenes Ausfiihrungsbeispiel der Erfindung dargestellt ist. Es zeigen:
- Fig. 1: in Seitenansicht ein handgeführtes Arbeitsgerät am Beispiel eines Trennschleifers,
- Fig. 2: in schematischer Darstellung eine Bremseinrichtung des handgeführten Arbeitsgerätes nach Fig. 1,
- Fig. 3: ein schematisches Schaltbild zum Betrieb des Elektromagneten zum Halten eines Bremselementes in der Bereitschaftsstellung,
- Fig. 4: ein Diagramm mit Darstellung des abfallenden Haltestroms bei fallender Drehzahl.

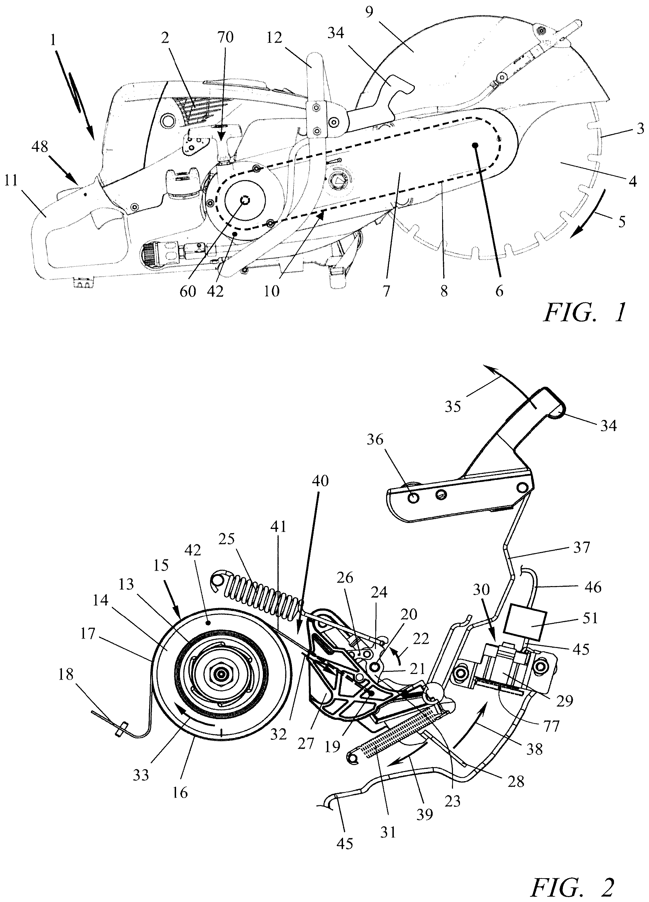

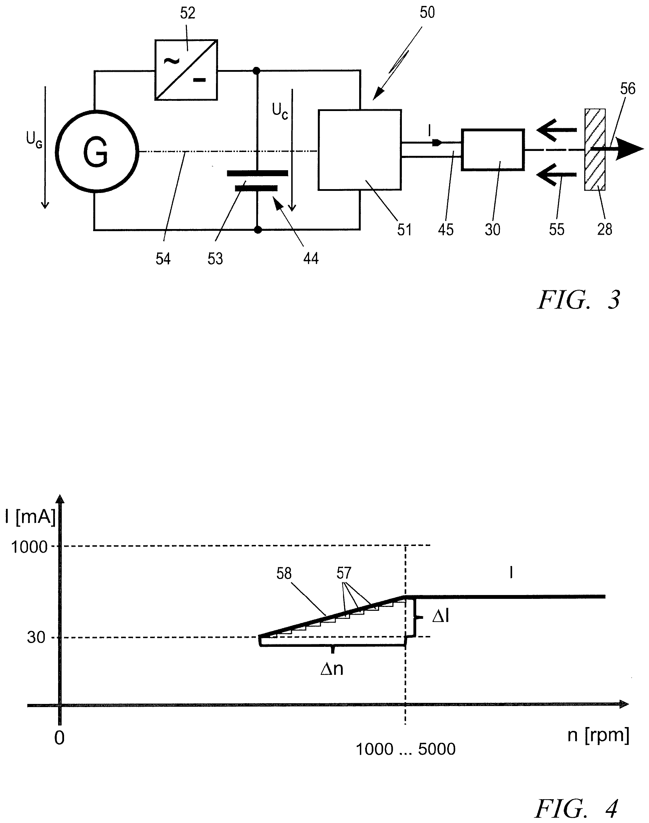

Das in Fig. 1 gezeigte handgeführte, insbesondere tragbare Arbeitsgerät 1 ist ein Trennschleifer mit einem Verbrennungsmotor 2 zum Antrieb eines Arbeitswerkzeugs 3. Das Arbeitswerkzeug 3 ist - in dem gezeigten Ausführungsbeispiel als Trennschleifer - als Trennscheibe 4 ausgebildet. Das Arbeitswerkzeug 3 ist in Drehrichtung 5 um eine Rotationsachse 6 angetrieben. Das Arbeitsgerät 1 kann auch ein anderes, handgeführtes Arbeitsgerät sein, z. B. ein Freischneider mit einem Messerblatt als Arbeitswerkzeug, eine Motorkettensäge mit einer Sägekette als Arbeitswerkzeug oder auch ein anderes handgeführtes Arbeitsgerät mit entsprechendem Aufbau. Der Verbrennungsmotor 2 des Arbeitsgerätes 1 wird durch einen Seilzugstarter 70 gestartet. Das Arbeitswerkzeug 1 weist keine Batterie oder dgl. Bauteile zum Speichern von elektrischer Energie auf. Die Energieversorgung des Arbeitsgerätes 1 erfolgt ausschließlich über einen von der Kurbelwelle des Verbrennungsmotors 2 angetriebenen elektrischen Generator G (Fig. 3). Insbesondere beim Starten steht dem Verbrennungsmotor 2 zunächst keine elektrische Energie zur Verfügung. Erst mit Drehung der Kurbelwelle wird der Generator G Energie bereitstellen, um z. B. eine Steuereinheit 51 zu betreiben. Die Steuereinheit 51 kann über eine elektrische Anschlussleitung 46 mit dem Generator G verbunden sein.

Das Arbeitswerkzeug 3 ist im Ausführungsbeispiel an einem Ausleger 7 gehalten, in dem ein Antrieb 10 für das Arbeitswerkzeug 3 aufgenommen ist. Bei einem Trennschleifer kann der Antrieb 10 als Riementrieb 8 ausgebildet sein, der eine Antriebsscheibe 13 (Fig. 2) umschlingt. Die Antriebsscheibe 13 ist vom Verbrennungsmotor 2 über eine Kupplung, insbesondere eine Fliehkraftkupplung 15 angetrieben. Das Arbeitswerkzeug 3 ist von einer Schutzhaube 9 übergriffen. Zum Halten und Führen des Arbeitsgeräts 1 ist im Ausführungsbeispiel ein vorderer, bügelartiger Handgriff 12 und ein hinterer Handgriff 11 vorgesehen. Im hinteren Handgriff 11 sind Bedienelemente 48 für den Betrieb des Verbrennungsmotors 2 angeordnet.

Die Antriebsscheibe 13 (Fig. 2) ist drehfest auf einer Kupplungstrommel 14 einer Fliehkraftkupplung 15 festgelegt. Die Antriebsscheibe 13 bildet zusammen mit der Kupplungstrommel 14 ein Antriebselement 42 für den Antrieb 10. Das Antriebselement 42 wird von dem Verbrennungsmotor 2 angetrieben.

Wie Fig. 2 zeigt, bildet die Kupplungstrommel 14 zugleich eine Bremstrommel 16 für eine Bremseinrichtung 40, die mit einem Bremselement 41 zusammenwirkt. Das Bremselement 41 ist im gezeigten Ausführungsbeispiel von einem Bremsband 17 gebildet, welches den Außenumfang der Bremstrommel 16 umschlingt. Der Umschlingungswinkel des Bremsbandes 17 beträgt vorzugsweise mehr als 360°. Die Figur 2 zeigt die Bremseinrichtung 40 in einer Bremsstellung, in der das Bremselement 41 in Form des Bremsbandes 17 an die Bremstrommel 16 angelegt ist. In dieser Bremsstellung liegt das Bremsband 17 an der Kupplungstrommel 14 an. Bei angelegtem Bremsband 17 bremst das Bremsband 17 die Kupplungstrommel 14, und das Arbeitswerkzeug 3 wird nicht angetrieben. Liegt das Bremsband 17 nicht an der Bremstrommel 16 bzw. der Kupplungstrommel 14 an, besteht also Spiel zwischen der Kupplungstrommel 14 und dem Bremsband 17, kann sich die Kupplungstrommel 14 drehen und das Arbeitswerkzeug 3 angetrieben werden.

Das Bremsband 17 ist mit seinem ersten Ende 18 gehäusefest festgelegt. Das zweite Ende 19 des Bremsbandes 17 ist an einem Bremshebel 20 festgelegt. Der Bremshebel 20 ist um eine gehäusefeste Drehachse 21 in Richtung des Pfeils 22 sowie in Gegenrichtung verschwenkbar. Der Bremshebel 20 ist ein im Wesentlichen zweiarmiger Hebel. An dem einen Hebelarm 23 des Bremshebels 20 ist das zweite Ende des Bremsbandes 17 festgelegt. An dem anderen Hebelarm 24 des Bremshebels 20 greift eine Bremsfeder 25 an, die den Bremshebel 20 in Pfeilrichtung 22 zu verschwenken sucht.

Der Bremshebel 20 ist vorteilhaft über eine Kniehebelanordnung 26 an einem Auslösehebel 27 abgestützt. Der Auslösehebel 27 trägt eine Halteplatte 28, der eine Haltevorrichtung 29 zugeordnet ist. Im gezeigten Ausführungsbeispiel ist die Haltevorrichtung 29 von einem Elektromagneten 30 gebildet. Im gezeigten Ausführungsbeispiel liegt die Halteplatte 28 nicht am Elektromagneten 30 an. Bevorzugt besteht die Halteplatte 28 aus einem magnetischen bzw. magnetisierbaren Material, bevorzugt aus einer Stahlplatte. Die Stahlplatte wird - ist der Elektromagnet 30 bestromt - von dem Magnetfeld des Elektromagneten 30 angezogen. Die Haltestellung 77 der Halteplatte 28 ist in Fig. 2 strichliert dargestellt. Der Elektromagnet 30 ist über eine Anschlussleitung 45 mit der Steuereinheit 51 (Fig. 3) verbunden.

Der Auslösehebel 27 kann mit einer Rückstellkraft 56 beaufschlagt sein, die vorteilhaft von einer Auslösefeder 31 bereitgestellt ist und in die in Fig. 2 gezeigte Bremsstellung wirkt. Wird der Haltestrom I (Fig. 3) des Elektromagneten 30 abgeschaltet, kann der Auslösehebel 27 unter der Wirkung der Zugkraft der Auslösefeder 31 in die in Fig. 2 gezeigte Freigabestellung verschwenken.

In der Bremsstellung der Bremseinrichtung 40 gibt der Auslösehebel 27 die Kniehebelanordnung 26 frei, so dass unter der Wirkung der Bremsfeder 25 der Bremshebel 20 in Pfeilrichtung 22 verschwenkt werden kann. Dadurch wird auf das Bremsband 17 in Pfeilrichtung 32 eine Zugkraft ausgeübt, wodurch sich das Bremsband 17 mit einer Anlagekraft an den Außenumfang der Bremstrommel 16 anlegt und diese abbremst. Dadurch wird die Antriebsscheibe 13 bzw. das Antriebselement 42 abgebremst und - über den Antrieb 10 - das Arbeitswerkzeug 3 stillgesetzt.

In einer bevorzugten Ausführungsform kann die Auslösefeder 31 entfallen, wie strichliert in Fig. 2 dargestellt ist. Die Kniehebelanordnung 26 wird in ihrer Anordnung verändert und derart in Richtung "Auslösen" verlagert, dass - ohne eine zusätzliche Auslösefeder - bei einem Abschalten des Haltestroms I des Elektromagneten 30 die Kniehebelanordnung 26 sofort auslöst und unter der Wirkung der Bremsfeder 25 der Bremshebel 20 in Pfeilrichtung 22 verschwenkt. Das Bremsband 17 wird mit einer Anlagekraft an die Bremstrommel 16 angelegt. Die Rückstellkraft 56 ist in diesem Ausführungsbeispiel beispielhaft durch die Bremsfeder 25 bereitgestellt.

Im Betrieb dreht die Bremstrommel 16 bzw. die Kupplungstrommel 14 in Pfeilrichtung 33, so dass durch die gewählte Anordnung des Bremsbandes 17 im Bremsfall eine Selbstverstärkung der Bremswirkung auftritt. Das Bremsband 17 wird sich aufgrund der Rotation der Bremstrommel 16 in Pfeilrichtung 33 zuziehen und fest an die Bremstrommel 16 anlegen.

Zum Lösen der angelegten Bremseinrichtung 40 gemäß Fig. 2 ist ein Betätigungshebel 34 vorgesehen, der in Pfeilrichtung 35 um eine gehäusefeste Lagerachse 36 zu verschwenken ist. Hierbei wird über eine Koppelstange 37 der Auslösehebel 17 in Pfeilrichtung 38 mitgenommen und die Halteplatte 28 an den Elektromagneten 30 angelegt. Ist der Elektromagnet 30 mit einem Haltestrom bestromt, wird die elektromagnetische Kraft des Elektromagneten 30 die Halteplatte 28 in der strichliert gezeichneten Haltestellung 77 am Elektromagneten 30 halten. In dieser Haltestellung 77 der Halteplatte 28 ist der Auslösehebel 27 in Pfeilrichtung 38 verschwenkt und hat die Kniehebelanordnung 26 in eine Bereitschaftsstellung der Bremseinrichtung 40 zurückgeführt. Der Bremshebel 20 ist entgegen Pfeilrichtung 22 verschwenkt, wodurch das Bremsband 17 entgegen Pfeilrichtung 32 verlagert ist, so dass das Bremsband 17 von der Bremstrommel 16 abhebt. Die Bremstrommel 16 und damit die Kupplungstrommel 14 sind zur Rotation freigegeben. Der Verbrennungsmotor 2 kann über die eingekuppelte Fliehkraftkupplung 15 und den Antrieb 10 das Arbeitswerkzeug 3 antreiben. Die Bremseinrichtung 40 ist in ihrer Bereitschaftsstellung.

Die Bremseinrichtung 40 wird vorteilhaft durch den Benutzer über den Betätigungshebel 34 von der Bremsstellung in die Bereitschaftsstellung gebracht. Hierzu bewegt der Benutzer den Betätigungshebel 34 in Pfeilrichtung 35, vorteilhaft gegen eine Rückstellkraft 56 der Bremseinrichtung 40. Wenn der Benutzer die Halteplatte 28 nahe an den bestromten Elektromagneten 30 geschwenkt hat, wird die Halteplatte 28 angezogen (Haltestellung 77), und die Bremseinrichtung 40 wird durch den Elektromagneten 30 in der Bereitschaftsstellung gehalten. Wird der Elektromagnet 30 nicht oder nicht ausreichend bestromt, wird die Halteplatte 28 zurückschwenken, sofern der Benutzer den Betätigungshebel 34 nicht mehr hält bzw. nicht mehr in Pfeilrichtung 35 zieht.

Der Elektromagnet 30 ist in dem schematischen Schaltbild 50 dargestellt (Fig. 3). Der Elektromagnet 30 wird von dem Generator G mit Energie gespeist, wobei der Generator G vom Verbrennungsmotor 2 (Fig. 1) angetrieben ist. Der Generator G wird eine Generatorspannung U_{G} abgeben, wenn die Kurbelwelle 60 des Verbrennungsmotors 2 (Fig. 1) dreht. Der Elektromagnet 30 wird die Halteplatte 28 so lange in der Haltestellung 77 (Fig. 2) halten, bis der auslaufende Verbrennungsmotor 2 eine Drehzahl n erreicht, bei der die Generatorspannung U_{G} so weit abgefallen ist, dass der Haltestrom I nicht mehr aufrechterhalten werden kann. Aufgrund des abgefallenen Haltestroms I kann die Halteplatte 28 nicht mehr in der Haltestellung 77 gehalten werden. Infolgedessen verschwenkt die Halteplatte 28 in Richtung auf ihre Ausgangslage in Pfeilrichtung 39 zurück. Das Bremsband 17 legt sich an die Kupplungstrommel 17 an, und der Antrieb wird gebremst. Das Arbeitswerkzeug 3 kommt zum Stillstand.

Wie Fig. 3 zeigt, wird die Generatorspannung U_{G} mittels eines Gleichrichters 52 gleichgerichtet und die elektrische Energie in einem Energiespeicher 44 zwischengespeichert. Der dem Elektromagneten 30 zugeführte Haltestrom I wird aus dem Energiespeicher 44 entnommen. Der Energiespeicher 44 ist im Ausführungsbeispiel als Kondensator 53 ausgebildet; der Kondensator 53 wird von der gleichgerichteten Generatorspannung U_{G} aufgeladen. Die Kondensatorspannung Uc speist eine Steuereinheit 51, die über eine Anschlussleitung 45 mit dem Elektromagneten 30 verbunden ist und den Haltestrom I zum Elektromagneten 30 überwacht und regelt. Nach der Erfindung ist vorgesehen, dass die Steuereinheit 51 den Haltestrom I verändert und nach dem Abschalten des Verbrennungsmotors 2 in vorgegebener Weise in Stufen 57 (Fig. 4) oder kontinuierlich nach einer Rampe 58 (Fig. 4) verringert.

Wird nach einem Betrieb des Verbrennungsmotors 2 dieser abgeschaltet, so wird die Drehzahl des Verbrennungsmotors 2 abfallen. Fällt die Auslaufdrehzahl des Verbrennungsmotors 2 unter die Einkuppeldrehzahl, öffnet die Fliehkraftkupplung 15. Der Verbrennungsmotor 2 ist von dem Arbeitswerkzeug 3 abgekoppelt. Das Arbeitswerkzeug 3 dreht aufgrund seiner rotierenden Masse und der Trägheit weiter.

Der Generator G wird bei auslaufendem Verbrennungsmotor 2 eine langsam kleiner werdende Generatorspannung U_{G} abgeben, aber den Kondensator 53 weiter laden. Aus dem Kondensator 53 wird die Energie entnommen, um den Elektromagneten 30 mit dem Haltestrom I zu bestromen.

Erreicht die Auslaufdrehzahl n des Verbrennungsmotors 2 einen Grenzwert von z. B. 1000 1/min oder unterschreitet die Auslaufdrehzahl des Verbrennungsmotors 2 den vorgegebenen Grenzwert, wird dies von der Steuereinheit 51 erkannt. Hierzu kann die Steuereinheit 51 zweckmäßig über eine geeignete Signalleitung 54 mit dem Generator G verbunden sein, um z. B. als Betriebsparameter des Verbrennungsmotors 2 seine Drehzahl zu erfassen.

Mit Erreichen des Grenzwertes des Betriebsparameters, im Ausführungsbeispiel die Auslaufdrehzahl des Verbrennungsmotors 2, bzw. bei einem Unterschreiten des Grenzwertes wird der dem Elektromagneten 30 zugeführte Haltestrom I in Stufen abgesenkt. Es kann auch vorteilhaft sein, dass der Haltestrom kontinuierlich abgesenkt wird. Die elektromagnetische Haltekraft 55 wird bei kleiner werdendem Haltestrom I geringer. Eine geringere Haltekraft führt jedoch nicht zu einem sofortigen Verschwenken bzw. Lösen der Halteplatte 28 vom Elektromagneten 30. Die Haltekraft 55 bleibt zunächst größer als eine in Pfeilrichtung 39 wirkende Rückstellkraft 56 z. B. der Auslösefeder 31. Mit anderen Worten, bei auslaufendem Verbrennungsmotor 2 wird die dem Elektromagneten 30 zugeführte Energie verringert. Die verringerte Energie reicht aber aus, um die Halteplatte 28 in Haltestellung 77 zu halten, insbesondere ohne Einwirkung stärkerer Faktoren wie z. B. Vibrationen oder Stöße. Beim Auslaufen des Verbrennungsmotors 2 treten Stöße und Vibrationen in nur geringerem Ausmaß auf als im Arbeitsbetrieb, so dass eine kleinere Halteenergie bei Auslaufen des Verbrennungsmotors 2 noch ausreichend ist.

Fig. 4 zeigt einen Haltestrom in einem Bereich von 30 mA bis 300 mA. Ein Haltestrom I von z. B. 185 mA wird über eine Drehzahl Δn um einen Betrag ΔI verringert. Diese Reduzierung des Haltestroms I ist bevorzugt als Funktion der Drehzahl in Form einer negativ fallenden Rampe 58 ausgebildet. Die Steigung der Rampe 58 kann als Quotient einer parametrierbaren Stromdifferenz ΔI zu einer parametrierbaren Drehzahldifferenz Δn bestimmt sein.

In einer weiteren Ausgestaltung der Erfindung kann vorgesehen sein, die Verringerung des Haltestroms in Stufen 57 vorzunehmen. Dabei kann pro Stufe eine Stromabnahme von z. B. 1 mA bis 10 mA vorgesehen sein. Bevorzugt wird eine Stufe 57 über einen Zeitraum von mindestens 5 ms gehalten.

Durch die vorgegebene Absenkung des Haltestroms I bei Erreichen eines Grenzwertes des Betriebsparameters des Verbrennungsmotors 2, wie z. B. der Auslaufdrehzahl oder der Amplitude der Generatorspannung U_{G}, kann erreicht werden, dass die Auslösung der Bremseinrichtung 40 bei auslaufendem Verbrennungsmotor 2 zeitlich später erfolgt. Dies hat beispielsweise den Vorteil, dass die Werkzeugdrehzahl des Arbeitswerkzeugs 3 weiter reduziert ist, so dass beim Anlegen der Bremseinrichtung 40 ein Abbremsen des auslaufenden Arbeitswerkzeugs 3 bei einer niedrigeren Werkzeugdrehzahl erfolgt. Der Verschleiß der Bremseinrichtung 40 kann gesenkt werden.

Da bei auslaufendem Verbrennungsmotor 2 die vom Generator G dem Energiespeicher 44 bzw. dem Kondensator 53 zufließende elektrische Energie kleiner wird als die aus dem Energiespeicher 44 bzw. dem Kondensator 53 zu dem Elektromagneten 30 abfließende elektrische Energie wird die Ladung des Kondensators 53 absinken. Ist die Ladung des Kondensators 53 so weit abgesunken, dass ein - auch reduzierter - Haltestrom I nicht mehr aufrechterhalten werden kann, wird der Elektromagnet 30 die Halteplatte 28 freigeben bzw. nicht mehr halten können. Die Halteplatte 28 wird unter einer Rückstellkraft 56 den Auslösehebel 27 in Pfeilrichtung 39 verschwenken und dadurch die Kniehebelanordnung 26 freigeben. Beispielsweise wird mit der Freigabe der Kniehebelanordnung 26 die Abstützung des Bremshebels 20 aufgehoben, so dass dieser unter der Wirkung der Bremsfeder 25 in Pfeilrichtung 22 verschwenken kann und auf das zweite Ende des Bremsbandes 17 in Pfeilrichtung 32 eine Anlagekraft aufbringt. Das Bremsband 17 legt sich unter der Wirkung der Anlagekraft an die Kupplungstrommel 14 an. Die Bremseinrichtung 40 bremst das Arbeitswerkzeug 3 ab und setzt dieses still. Diese Bremsung wird auch als Auslaufbremsung bezeichnet.

Durch die Zwischenspeicherung der vom Generator G erzeugten elektrischen Energie in einem zweckmäßig als Kondensator 53 ausgebildeten Energiespeicher 44 kann der Elektromagnet 30 auch dann noch mit einem - verringerten - Haltestrom I bestromt werden, wenn die Generatorspannung U_{G} selbst bereits zu klein ist, um einen Haltestrom aufrechtzuerhalten. Die dem Energiespeicher 44 zufließende Energie ist dann geringer als die von der Steuereinheit 51 zur Aufrechterhaltung des Haltestroms I abgezogene Energie. Erst wenn die Ladung des Kondensators 53 aufgebraucht ist, bricht der Haltestrom I ein, und der Elektromagnet 30 schaltet ab. Diese Haltezeit des Elektromagneten 30 nach Abschalten des Verbrennungsmotors 2 wird durch die Kapazität des Energiespeichers 44, d. h. die Kapazität des Kondensators 53 bestimmt.

Durch die Absenkung des Haltestroms I bei abfallender Drehzahl n des Verbrennungsmotors 2 wird die Energiezufuhr zum Elektromagneten 30 gesenkt, so dass die Halteplatte 28 und das mit der Halteplatte 28 gekoppelte Bremselement 41 bei auslaufendem Verbrennungsmotor 2 für einen längeren Zeitraum von dem Antriebselement 42 gelöst gehalten werden kann, also die Bremseinrichtung 40 in der Bereitschaftsstellung verbleibt. Erst wenn der Haltestrom I so weit abgesenkt ist, dass die Haltekraft 55 kleiner wird als die Rückstellkraft 56, fällt die Bremseinrichtung 40 in die Bremsstellung. Das Bremselement 41 legt sich an das Antriebselement 42 an und bremst das Arbeitswerkzeug 3 bis zum Stillstand ab.

## Patentansprüche

1. Arbeitsgerät mit einem Arbeitswerkzeug, wobei das Arbeitswerkzeug (3) von einem Verbrennungsmotor (2) angetrieben ist,
- und mit einer Bremseinrichtung (40) zum Abbremsen eines auslaufenden Arbeitswerkzeugs (3), wobei die Bremseinrichtung (40) ein das Arbeitswerkzeugs (3) abbremsendes Bremselement (41) aufweist, und in einer Bremsstellung der Bremseinrichtung (40) das Bremselement (41) das Arbeitswerkzeug (3) abbremst,
- und in einer Bereitschaftsstellung das Bremselement (41) die Bewegung des Arbeitswerkzeugs (3) freigibt, wobei das Bremselement (41) in der Bereitschaftsstellung mit einer Haltekraft (55) von einem Elektromagneten (30) gehalten ist,
- und mit einem vom Verbrennungsmotor (2) angetriebenen elektrischen Generator (G), der die Energie zum Betrieb des Elektromagneten (30) bereitstellt,
- wobei die vom Generator (G) abgegebene elektrische Energie in einem Energiespeicher (44) zwischengespeichert wird,
- und in der Bereitschaftsstellung der Bremseinrichtung (41) dem Elektromagneten (30) ein Haltestrom (I) zugeführt ist, und der dem Elektromagneten (30) zugeführte Haltestrom (I) aus dem Energiespeicher (44) entnommen wird,
- und mit einer Steuereinheit (51), **dadurch gekennzeichnet, dass** die Steuereinheit (51) nach dem Ausschalten des Verbrennungsmotors (2) einen Betriebsparameter des Verbrennungsmotors (2) überwacht oder erfasst,
- und dass die Steuereinheit (51) nach Erreichen eines Grenzwertes des Betriebsparameters der dem Elektromagneten (30) aus dem Energiespeicher (44) zugeführte Haltestrom (I) absenkt.

2. Arbeitsgerät nach Anspruch 1,
**dadurch gekennzeichnet, dass** der Betriebsparameter des Verbrennungsmotors (2) seine Drehzahl ist.

3. Arbeitsgerät nach Anspruch 1,
**dadurch gekennzeichnet, dass** der Betriebsparameter des Verbrennungsmotors (2) die Ausgangsspannung (U_{G}) des Generators (G) ist.

4. Arbeitsgerät nach Anspruch 1,
**dadurch gekennzeichnet, dass** der Haltestrom (I) in einem Bereich von 30 mA bis 300 mA liegt.

5. Arbeitsgerät nach Anspruch 1,
**dadurch gekennzeichnet, dass** der Haltestrom (I) als Funktion der Drehzahl (n) in Form einer negativ fallenden Rampe (56) verringert wird.

6. Arbeitsgerät nach Anspruch 1,
**dadurch gekennzeichnet, dass** die Steigung der Rampe (56) als Quotient einer parametrierbaren Stromdifferenz (ΔI) zu einer parametrierbaren Drehzahldifferenz (Δn) bestimmt ist.

7. Arbeitsgerät nach Anspruch 1,
**dadurch gekennzeichnet, dass** der Haltestrom (I) in Stufen (57) abgesenkt wird.

8. Arbeitsgerät nach Anspruch 1,
**dadurch gekennzeichnet, dass** der Energiespeicher (44) ein Kondensator (53) ist.

9. Arbeitsgerät nach Anspruch 1,
**dadurch gekennzeichnet, dass** der Energiespeicher (44) ein Kondensator (53) ist.

10. Arbeitsgerät nach Anspruch 1,
**dadurch gekennzeichnet, dass** nach dem Abschalten des Verbrennungsmotors (2) die dem Energiespeicher (44) zufließende elektrische Energie kleiner wird als die aus dem Energiespeicher (44) zu dem Elektromagneten (30) abfließende elektrische Energie.

11. Arbeitsgerät nach Anspruch 1,
**dadurch gekennzeichnet, dass** eine vorgegebene Haltezeit des Elektromagneten (30) nach Abschalten des Verbrennungsmotors (2) durch die Kapazität des Energiespeichers (44) bestimmt ist.

12. Arbeitsgerät nach Anspruch 1,
**dadurch gekennzeichnet, dass** das Arbeitswerkzeug (3) von einem Verbrennungsmotor (2) angetrieben ist, und der Antrieb (10) ein Antriebselement (42) aufweist, wobei das Bremselement (41) auf das Antriebselement (42) wirkt.

13. Arbeitsgerät nach Anspruch 1,
**dadurch gekennzeichnet, dass** das Antriebselement (42) die Kupplungstrommel (14) einer Fliehkraftkupplung (15) ist.

14. Arbeitsgerät nach Anspruch 1,
**dadurch gekennzeichnet, dass** das Bremselement (41) unter der Wirkung einer Anlagekraft auf das Antriebselement (42) wirkt.

15. Arbeitsgerät nach Anspruch 1,
**dadurch gekennzeichnet, dass** die Anlagekraft von einer Bremsfeder (25) bereitgestellt ist.

## Claims

1. Work apparatus with a work tool, wherein the work tool (3) is driven by a combustion engine (2),
- and with a brake unit (40) for braking a slowing-down work tool (3), wherein the brake unit (40) has a brake element (41) which brakes the work tool (3), and, in a braking position of the brake unit (40), the brake element (41) brakes the work tool (3),
- and, in a stand-by position, the brake element (41) releases the movement of the work tool (3), wherein the brake element (41) is held in the stand-by position with a holding force (55) from an electromagnet (30),
- and with an electric generator (G) which is driven by the combustion engine (2) and which supplies the energy for operating the electromagnet (30),
- wherein the electrical energy output by the generator (G) is temporarily stored in an energy store (44),
- and, in the stand-by position of the brake unit (41), a holding current (I) is supplied to the electromagnet (30), and the holding current (I) which is supplied to the electromagnet (30) is extracted from the energy store (44),
- and with a control unit (51), **characterized in that**, after the combustion engine (2) is switched off, the control unit (51) monitors or senses an operating parameter of the combustion engine (2),
- and **in that**, after a limit value of the operating parameter is reached, the control unit (51) reduces the holding current (I) supplied to the electromagnet (30) from the energy store (44).

2. Work apparatus according to Claim 1,
**characterized in that** the operating parameter of the combustion engine (2) is the rotational speed thereof.

3. Work apparatus according to Claim 1,
**characterized in that** the operating parameter of the combustion engine (2) is the starting voltage (U_{G}) of the generator (G).

4. Work apparatus according to Claim 1,
**characterized in that** the holding current (I) lies within a range of 30 mA to 300 mA.

5. Work apparatus according to Claim 1,
**characterized in that** the holding current (I) is reduced as a function of the rotational speed (n) in the form of a negatively falling ramp (56).

6. Work apparatus according to Claim 1,
**characterized in that** the slope of the ramp (56) is determined as a quotient of a parametrizable current difference (ΔI) from a parametrizable rotational speed difference (Δn).

7. Work apparatus according to Claim 1,
**characterized in that** the holding current (I) is reduced in steps (57).

8. Work apparatus according to Claim 1,
**characterized in that** the energy store (44) is a capacitor (53).

9. Work apparatus according to Claim 1,
**characterized in that** the energy store (44) is a capacitor (53).

10. Work apparatus according to Claim 1,
**characterized in that**, after the combustion engine (2) is switched off, the electrical energy flowing to the energy store (44) becomes smaller than the electrical energy flowing out of the energy store (44) to the electromagnet (30).

11. Work apparatus according to Claim 1,
**characterized in that** a predetermined holding time of the electromagnet (30) after the combustion engine (2) is switched off is determined by the capacity of the energy store (44).

12. Work apparatus according to Claim 1,
**characterized in that** the work tool (3) is driven by a combustion engine (2), and the drive (10) has a drive element (42), wherein the brake element (41) acts on the drive element (42).

13. Work apparatus according to Claim 1,
**characterized in that** the drive element (42) is the clutch drum (14) of a centrifugal clutch (15).

14. Work apparatus according to Claim 1,
**characterized in that** the brake element (41) acts with the effect of a contact force on the drive element (42).

15. Work apparatus according to Claim 1,
**characterized in that** the contact force is supplied by a brake spring (25).

## Revendications

1. Dispositif de travail comprenant un outil de travail, l'outil de travail (3) étant entraîné par un moteur à combustion interne (2),
- et un mécanisme de freinage (40) destiné à freiner un outil de travail (3) en mouvement libre, le mécanisme de freinage (40) comportant un élément de freinage (41) qui freine l'outil de travail (3), et l'élément de freinage (41) freinant l'outil de travail (3) dans une position de freinage du mécanisme de freinage (40),
- et l'élément de freinage (41) libérant le mouvement de l'outil de travail (3) dans une position d'attente, l'élément de freinage (41) étant maintenu dans la position d'attente avec une force de maintien (55) par un électro-aimant (30),
- et un générateur électrique (G) qui est entraîné par le moteur à combustion interne (2) et qui fournit l'énergie pour faire fonctionner l'électro-aimant (30),
- l'énergie électrique produite par le générateur (G) étant temporairement stockée dans un accumulateur d'énergie (44),
- et dans la position d'attente du mécanisme de freinage (41) un courant de maintien (I) étant fourni à l'électro-aimant (30), et le courant de maintien (I) fourni à l'électro-aimant (30) étant pris sur l'accumulateur d'énergie (44),
- et une unité de commande (51), **caractérisé en ce que** l'unité de commande (51) surveille ou détecte un paramètre de fonctionnement du moteur à combustion interne (2) après l'arrêt du moteur à combustion interne (2),
- et **en ce que** l'unité de commande (51) diminue le courant de maintien (I) fourni à l'électroaimant (30) à partir de l'accumulateur d'énergie (44) après qu'une valeur limite du paramètre de fonctionnement a été atteinte.

2. Dispositif de travail selon la revendication 1,
**caractérisé en ce que** le paramètre de fonctionnement du moteur à combustion interne (2) est sa vitesse de rotation.

3. Dispositif de travail selon la revendication 1,
**caractérisé en ce que** le paramètre de fonctionnement du moteur à combustion interne (2) est la tension de sortie (UG) du générateur (G).

4. Dispositif de travail selon la revendication 1,
**caractérisé en ce que** le courant de maintien (I) est dans une gamme allant de 30 mA à 300 mA.

5. Dispositif de travail selon la revendication 1,
**caractérisé en ce que** le courant de maintien (I) est réduit en fonction de la vitesse de rotation (n) sous la forme d'une rampe (56) descendante négativement.

6. Dispositif de travail selon la revendication 1,
**caractérisé en ce que** la pente de la rampe (56) est déterminée comme étant le quotient d'une différence de courant paramétrable (ΔI) sur une différence de vitesse de rotation paramétrable (Δn).

7. Dispositif de travail selon la revendication 1,
**caractérisé en ce que** le courant de maintien (I) est réduit par paliers (57).

8. Dispositif de travail selon la revendication 1,
**caractérisé en ce que** l'accumulateur d'énergie (44) est un condensateur (53).

9. Dispositif de travail selon la revendication 1,
**caractérisé en ce que** l'accumulateur d'énergie (44) est un condensateur (53).

10. Dispositif de travail selon la revendication 1,
**caractérisé en ce que**, après l'arrêt du moteur à combustion interne (2), l'énergie électrique fournie à l'accumulateur d'énergie (44) devient inférieure à l'énergie électrique allant de l'accumulateur d'énergie (44) à l'électroaimant (30).

11. Dispositif de travail selon la revendication 1,
**caractérisé en ce qu'**un temps de maintien spécifié de l'électroaimant (30) après l'arrêt du moteur à combustion interne (2) est déterminé par la capacité de l'accumulateur d'énergie (44).

12. Dispositif de travail selon la revendication 1,
**caractérisé en ce que** l'outil de travail (3) est entraîné par un moteur à combustion interne (2), et l'entraînement (10) comporte un élément d'entraînement (42), l'élément de freinage (41) agissant sur l'élément d'entraînement (42).

13. Dispositif de travail selon la revendication 1,
**caractérisé en ce que** l'élément d'entraînement (42) est le tambour d'embrayage (14) d'un embrayage centrifuge (15).

14. Dispositif de travail selon la revendication 1,
**caractérisé en ce que** l'élément de freinage (41) agit sur l'élément d'entraînement (42) sous l'action d'une force d'appui.

15. Dispositif de travail selon la revendication 1,
**caractérisé en ce que** la force d'appui est fournie par un ressort de frein (25).
